(19) **Europäisches Patentamt / European Patent Office / Office européen des brevets**

(11) **EP 1 421 789 B1**

(12) # FASCICULE DE BREVET EUROPEEN

(45) Date de publication et mention
de la délivrance du brevet:
**14.10.2009 Bulletin 2009/42**

(21) Numéro de dépôt: **02745508.8**

(22) Date de dépôt: **10.06.2002**

(51) Int Cl.:
*H04N 7/16* *(2006.01)*    *H04N 7/167* *(2006.01)*

(86) Numéro de dépôt international:
**PCT/FR2002/001974**

(87) Numéro de publication internationale:
**WO 2002/102074 (19.12.2002 Gazette 2002/51)**

(54) **PROCEDE DE CONTROLE D'ACCES A UN PROGRAMME CRYPTE**

ZUGRIFFSKONTROLLVERFAHREN FÜR VERSCHLÜSSELTE PROGRAMME

METHOD FOR CONTROLLING ACCESS TO AN ENCRYPTED PROGRAMME

(84) Etats contractants désignés:
**AT BE CH CY DE DK ES FI FR GB GR IE IT LI LU MC NL PT SE TR**

(30) Priorité: **12.06.2001 FR 0107658**

(43) Date de publication de la demande:
**26.05.2004 Bulletin 2004/22**

(73) Titulaire: **NAGRA THOMSON LICENSING**
**92100 Boulogne-Billancourt (FR)**

(72) Inventeur: **DEROUET, Odile**
**F-92120 Montrouge (FR)**

(74) Mandataire: **Wenger, Joel-Théophile et al**
**Leman Consulting S.A.**
**Chemin de Précossy 31**
**1260 Nyon (CH)**

(56) Documents cités:
**EP-A- 1 051 036**    **WO-A-99/09743**
**US-A- 6 055 314**

**Description**

**DOMAINE TECHNIQUE**

L'invention concerne un procédé de contrôle d'accès à un programme crypté diffusé par un opérateur à une pluralité de groupes d'abonnés, chaque groupe d'abonné étant muni d'une clé de groupe KG, et chaque abonné recevant de l'opérateur, lors de la diffusion du programme crypté, une clé d'exploitation KT chiffrée avec la clé de groupe KG et destinée à décrypter le programme diffusé.

**ETAT DE LA TECHNIQUE ANTERIEURE**

Dans la norme DVB, les programmes transmis sont cryptés par un mot de contrôle CW qui changent après une période correspondant à sa période de diffusion. Un nouveau mot de contrôle correspondant au même programme ou à un nouveau programme est transmis aux abonnés avec des messages de contrôle d'accès ECM et EMM (respectivement "Entitlement Control Message", et "Entitlement Management Message", en anglais).

Les ECM comportent trois champs, un premier champ contenant les paramètres d'accès qui définissent les conditions d'accès au programme crypté, tels que par exemple le contrôle parental ou la limitation géographique de réception du programme diffusé, un deuxième champ comprenant le mot de contrôle CW chiffré par la clé d'exploitation KT et un troisième champ contenant les paramètres de contrôle d'intégrité des informations transmises.

Les EMM comportent généralement quatre champs, un premier champ d'adresse pour sélectionner un décodeur individuel, un deuxième champ contenant l'autorisation d'accès de l'utilisateur, un troisième champ contenant la clé d'exploitation KT chiffrée par la clé de groupe KG, et un quatrième champ contenant les paramètres de contrôle de l'intégrité des informations transmises.

Les ECM sont transmis avec le programme crypté tandis que les EMM sont généralement transmis avant la date de diffusion de ces programmes.

Pour un groupe g d'abonnés, le résultat du chiffrement de la clé d'exploitation KT par la clé de groupe KG est fourni avec une EMM chiffrée $EMM_g = F(KT, KG)$ où F désigne un algorithme de chiffrement. Lorsqu'un décodeur reçoit cette EMM, il vérifie si la clé d'exploitation KT est déjà mémorisée, dans une carte à puce par exemple. Sinon, la clé est déchiffrée par la fonction inverse $F^{-1}$ puis stockée dans la carte à puce. Lorsque le programme crypté est diffusé, la clé KT est utilisée par l'algorithme de chiffrement pour déchiffrer le mot de contrôle CW ayant servi à crypter les données_ du programme diffusé.

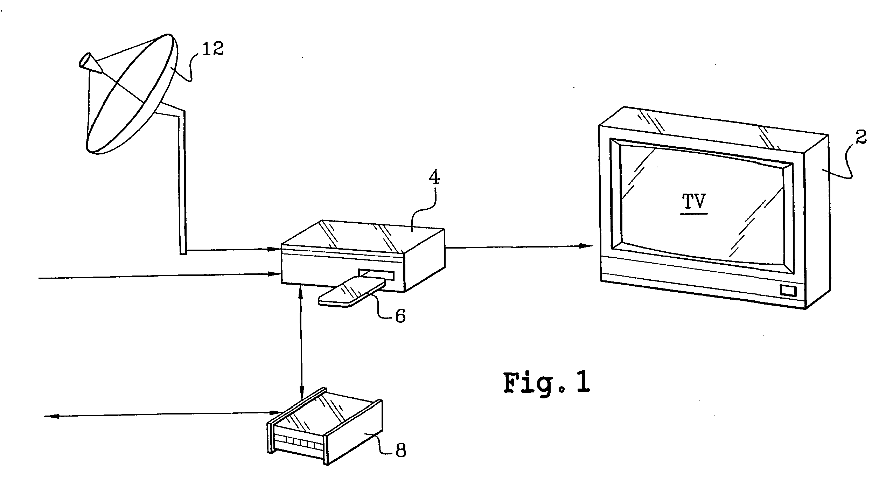

La figure 1 représente schématiquement un exemple de dispositif de réception de programmes cryptés diffusés par un opérateur 1. Pour recevoir ces programmes, un abonné dispose d'un récepteur 2, d'un décodeur 4 et d'une carte à puce 6 qui doit être inséré dans le décodeur 4 et dans laquelle est stockée la clé de groupe KG commune à un groupe de N cartes, N étant égal à 256 par exemple. Un modem 8 connecté à la ligne téléphonique de l'abonné permet d'assurer une voie de retour entre cet abonné et l'opérateur 1. Une antenne 12 reçoit les signaux transmis par l'opérateur 1 et les transmet au décodeur 4.

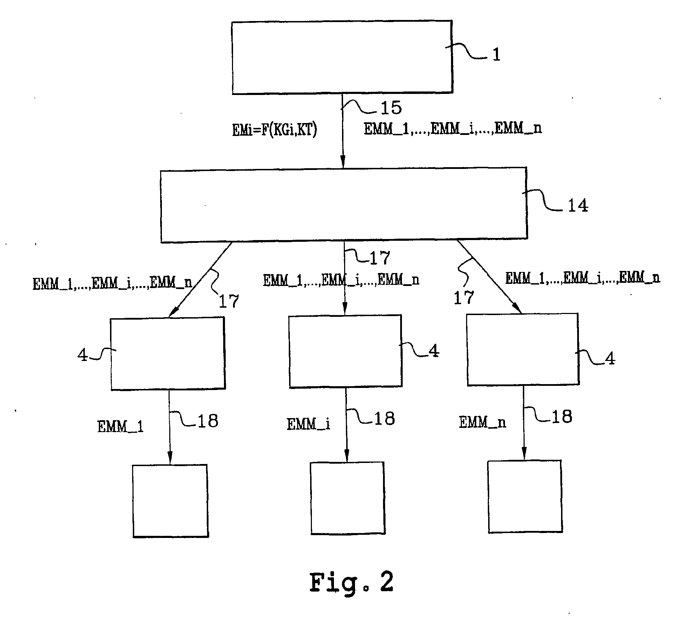

La figure 2 illustre schématiquement le fonctionnement du dispositif de la figure 1.

L'opérateur 1 envoie à un système de diffusion 14 (flèche, 15), une clé d'exploitation KT chiffrée à l'aide de la clé de groupe KG de chaque groupe. Le système de diffusion 14 envoie à chaque décodeur 4 (flèches 17) l'ensemble des $EMM_i = F(KG_i, KT)$. Chaque décodeur 4 transfère à la carte à puce 6 (flèches 18) d'un abonné du groupe g considéré l'$EMM_g$ correspondant à ce groupe. A la réception de l'$EMM_g$, la carte à puce 6 déchiffre la clé KT au moyen de la clé du groupe KG et mémorise la clé déchiffrée. A la date prévue pour diffuser un programme crypté, l'opérateur diffuse de façon cyclique les $ECM_i$ avec ce programme crypté vers les décodeurs 4. A la réception de ces $ECM_i$, le décodeur 4 trie les $ECM_i$ correspondant à la clé KT transmise et les envoie à la carte à puce.

Une faiblesse de ce procédé provient du fait que la clé d'exploitation KT est commune à tous les utilisateurs. Par conséquent, il est possible pour un utilisateur qui réussit à retrouver sa clé de groupe KG, de calculer frauduleusement la clé d'exploitation KT et de la diffuser.

Le document WO99/09743 décrit une solution dans laquelle les décodeurs sont adressés individuellement au moyen de messages encrypté par une clé asymétrique. Le message ainsi encrypté permet de transporter une clé dite "long terme", cette clé étant nécessaire pour décrypter le contenu d'un message contenant une dérivation de la clé finale, celle permettant d'accéder au contenu audio ou vidéo.

La solution ainsi décrite n'empêche par un tiers malveillant de diffuser à des récepteurs pirates la clé "long terme" dans le cas ou une telle clé a été compromise. Une fois la diffusion du message contenant la dérivation de la clé finale, cette dernière est immédiatement accessible pour ces tiers.

Le but de l'invention est de retrouver l'origine d'une diffusion frauduleuse d'une clé d'exploitation KT.

Un autre but de l'invention est de rendre imprévisible pour un fraudeur potentiel, la date à laquelle la clé d'exploitation KT sera utilisée.

Selon un premier mode de réalisation de l'invention, le procédé comporte les étapes suivantes : avant la diffusion du programme crypté,

a- associer à la clé d'exploitation KT chiffrée une valeur aléatoire R pour générer un code secret ;
b- transmettre ce code secret aux abonnés, et
c- transmettre la valeur aléatoire R aux abonnés pour calculer la clé d'exploitation KT seulement lorsque le programme crypté est diffusé..

Selon l'invention, le code secret est calculé par une fonction arithmétique réversible.

Selon l'invention, la fonction arithmétique réversible est l'opération logique XOR.

Selon l'invention, le code secret calculé est mémorisé dans une carte à puce.

Dans un deuxième mode de réalisation de l'invention dans lequel chaque abonné est susceptible de recevoir de l'opérateur un nombre entier m de clés d'exploitation $KT_i$ pour décrypter un programme diffusé, le procédé comporte les étapes suivantes :

avant la diffusion du programme crypté,

a- associer à chaque clé d'exploitation $KT_i$ chiffrée une valeur aléatoire $R_i$ pour générer un nombre entier r de codes secrets distincts;
b- transmettre ces codes secrets générés à chaque abonné; et
c- transmettre aux abonnés une valeur aléatoire $R_i$ pour calculer une clé d'exploitation $KT_i$ parmi les m clés $KT_i$ seulement lorsque le programme crypté est diffusé, et au bout d'une durée choisie par l'opérateur,
d- transmettre aux abonnés une nouvelle valeur aléatoire $R_i$ pour changer la clé d'exploitation $KT_i$.

Selon une caractéristique de ce mode de réalisation, les valeurs aléatoires Ri sont transmises successivement aux abonnés à des dates imprévisibles.

Selon l'invention, chaque code secret est calculé par une fonction arithmétique réversible.

Selon l'invention, les codes secrets calculés sont mémorisés dans une carte à puce.

Grâce à l'invention, si un fraudeur veut diffuser publiquement la clé KT avant la diffusion du programme à décrypter, il devra diffuser la valeur de l'EMMg ce qui permettra à l'opérateur de retrouver le groupe auquel appartient le fraudeur.

**BREVE DESCRIPTION DES FIGURES**

D'autres caractéristiques et avantages de l'invention ressortiront de la description qui va suivre, prise à titre d'exemple non limitatif, en référence aux figures annexées dans lesquelles :

- La figure 1 décrite précédemment représente un exemple de dispositif connu de réception de programmes cryptés;
- la figure 2 décrite précédemment illustre schématiquement le fonctionnement du dispositif de la figure 1;
- La figure 3 illustre schématiquement un premier mode de réalisation du procédé de l'invention;
- la figure 4 illustre schématiquement un deuxième mode de réalisation du procédé de l'invention.

**DESCRIPTION DETAILLEE DE MODE DE MISE EN OEUVRE DE L'INVENTION**

Dans la suite de la description, des références identiques désigneront les éléments et les étapes communs au procédé de l'art antérieur et au procédé selon l'invention.

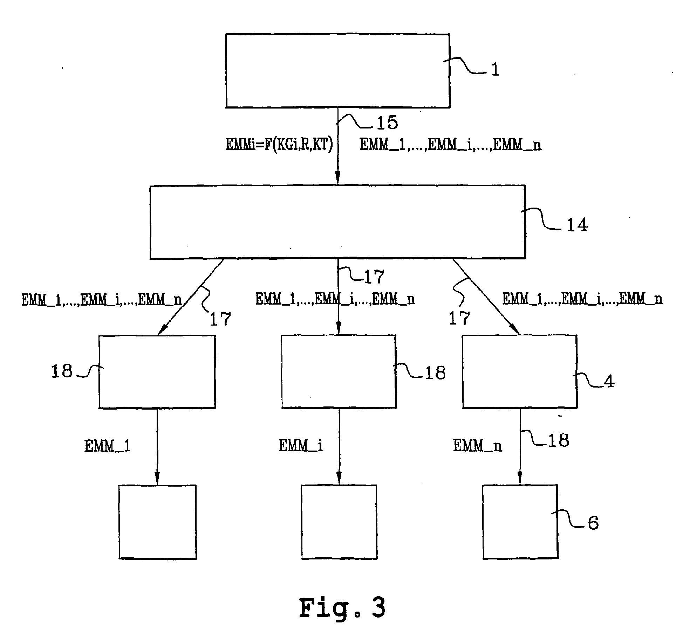

En référence à la figure 3, un opérateur 1 associe une valeur aléatoire R à une clé d'exploitation KT et envoie à un système de diffusion 14 (flèche 15) le code secret résultant de cette association. Préférentiellement, la clé d'exploitation KT chiffrée à l'aide de la clé de groupe KG est combinée par l'opération logique XOR à la valeur aléatoire secrète R. Le code généré ne pourra être déchiffré que si la valeur R est dévoilée. Le système de diffusion 14 envoie ensuite à chaque décodeur 4 (flèches 17) d'un groupe i, i représentant le rang d'un groupe d'abonnés parmi n groupes distincts, une EMM calculée par l'expression :

$$EMM_i = F(KG_i, KT) \oplus R.$$

Chaque décodeur 4 transfère à la carte à puce 6 (flèche 18) l'$EMM_i$ correspondant au groupe i. A la date de diffusion du programme crypté, l'opérateur diffuse de façon cyclique les ECM avec ce programme vers les décodeurs 4. Ces ECM contiennent le mot de contrôle CW utilisés pour crypter les données du programme transmis. Le décodeur 4 trie les $ECM_i$ correspondant à la clé KT et les envoie à la carte à puce 6 qui mémorise le code secret généré. Tant que l'opérateur n'pas diffusé la valeur R, la carte à puce ne pourra pas déchiffrer ce code secret pour retrouver la clé d'exploitation KT. Ceci permet à l'opérateur de diffuser la valeur R le plus tard possible, c'est à dire, uniquement lorsque la clé d'exploitation KT doit être utilisée pour déchiffrer le mot de contrôle CW.

Dès que la clé KT est utilisée, l'opérateur envoie aux décodeurs 4 la valeur:

$$ECM = R \oplus F(EMMg \oplus R, KG).$$

L'algorithme hébergé par la carte à puce pourra alors calculer la valeur de la clé d'exploitation KT en utilisant l'opération :

$$KT = F^{-1}(EMM_g \oplus R, KG) ;$$

Le mot de contrôle peut ensuite être déduit par l'expression :

$$CW = F^{-1}(ECM, KT).$$

Si un fraudeur veut diffuser publiquement la clé KT avant le début de la diffusion du programme crypté, il devra diffuser la valeur EMMg qui dépend de la clé de groupe KG. L'opérateur sera en mesure de retrouver le groupe auquel appartient le fraudeur et retirer les droits d'accès à ce groupe.

Ce mode de réalisation dissuade par conséquent le fraudeur de diffuser les clés d'exploitation KT lors de la réception des EMM.

Cependant, lorsque la valeur R est dévoilée par l'opérateur, la valeur de la clé d'exploitation KT peut être recalculée et diffusée publiquement.

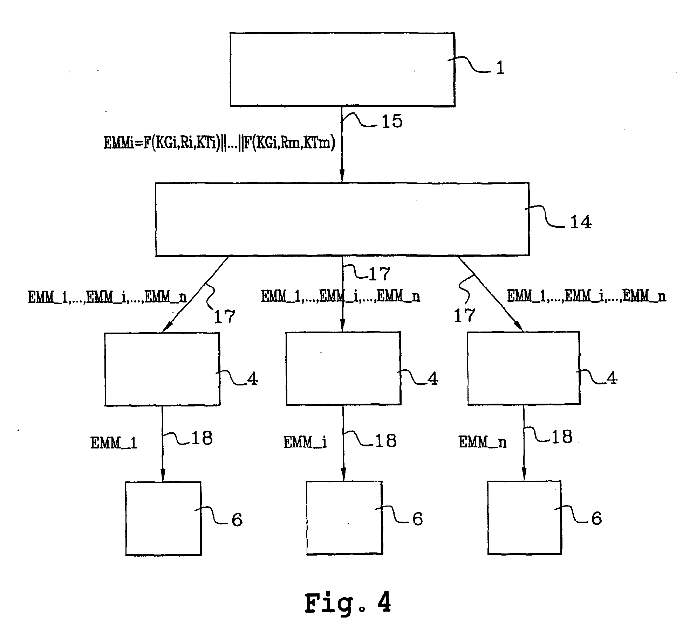

Aussi, pour empêcher cette diffusion, ou du moins la rendre fastidieuse, selon un deuxième mode de réalisation de l'invention illustré par la figure 4, avant la diffusion du programme crypté, l'opérateur 1 envoie au système de diffusion 14 (flèche 15), un nombre entier m de clés d'exploitation $KT_1$, $KT_2$...$KT_i$...$KT_m$. Chaque clé $KT_i$ est chiffrée à l'aide de la clé de groupe KG du groupe i et est associée par l'opération logique XOR à une valeur aléatoire secrète $R_i$ connue uniquement par l'opérateur de manière à générer un code secret qui ne pourra être déchiffré que si la valeur $R_i$ est dévoilée.

Le système de diffusion 14 envoie à chaque décodeur 4 (flèches 17) l'ensemble des EMM calculés par l'expression :

$$EMM_i = F(KG_i, KT_1) \oplus R_1 \parallel F(KG_i, KT_2) \oplus R_2 \parallel ...F(KG_i, KT_i) \oplus R_i \parallel .....F(KG_i, KT_m) \oplus R_m \parallel .$$

où le symbole $\parallel$ représente l'opération de concaténation.

Le décodeur 4 du groupe i transfère à la carte à puce 6 (flèche 18) l'$EMM_i$ correspondant à ce groupe. A la date de diffusion du programme crypté, l'opérateur diffuse de façon cyclique les ECM avec le programme crypté vers les décodeurs 4. Ces ECM contiennent le mot de contrôle CW utilisés pour crypter les données du programme transmis. Le décodeur 4 trie les $ECM_i$ correspondant à la clé $KT_i$ et les envoie à la carte à puce 6 qui mémorise le code secret généré. Tant que l'opérateur n'a pas diffusé une valeur $R_i$, la carte à puce ne pourra pas déchiffrer ce code secret pour retrouver la clé d'exploitation $KT_i$. Chaque clé $KT_i$ demeure donc stockée dans la carte à puce 6.

Les valeurs $R_i$ sont diffusées via les ECM en fonction de la clé ayant servi à chiffrer les mots de contrôle.

Dès que la clé $KT_i$ est utilisée, l'opérateur envoie aux décodeur 4 l'ECM:

$$ECM = R_i \parallel F(CW, KT_i)$$

Ce mode de réalisation permet d'affecter aux différentes clés d'exploitation $KT_i$ une période de validité suffisamment courte et imprévisible pour rendre la diffusion frauduleuse d'une clé $KT_i$ fastidieuse après que la valeur $R_i$ a été dévoilée.

Grâce à ce deuxième mode de réalisation, l'opérateur peut changer la clé $KT_i$ de façon imprévisible en fonction de l'intérêt des programmes diffusés.

**Revendications**

1. Procédé de contrôle d'accès à un programme crypté diffusé par un opérateur (1) à une pluralité de groupes d'abonnés, chaque groupe d'abonnés étant muni d'une clé de groupe KG, et chaque abonné étant susceptible de recevoir de l'opérateur (1) une clé d'exploitation KT chiffrée par la clé de groupe KG pour décrypter le programme diffusé, ce dernier étant encrypté par des mots de contrôle (CW), procédé **caractérisé en ce qu'**il comporte en outre les étapes suivantes :

   avant la diffusion du programme crypté,

       a- associer à la clé d'exploitation KT chiffrée une valeur aléatoire R pour générer un code secret ;
       b- transmettre le code secret aux abonnés, et
       c- transmettre la valeur aléatoire R aux abonnés pour calculer la clé d'exploitation KT lorsque la clé d'exploitation KT doit être utilisée pour déchiffrer le mot de contrôle CW .

2. Procédé selon la revendication 1, **caractérisé en ce que** le code secret est calculé par une fonction arithmétique réversible.

3. Procédé selon la revendication 2 **caractérisé en ce que** la fonction arithmétique réversible est l'opération logique XOR.

4. Procédé selon la revendication 1, **caractérisé en ce que** le code secret généré est mémorisé dans une carte à puce.

5. Procédé de contrôle d'accès à un programme crypté diffusé par un opérateur (1) à une pluralité de groupes d'abonnés, chaque groupe d'abonnés étant muni d'une clé de groupe KG, et chaque abonné étant susceptible de recevoir de l'opérateur (1) un nombre entier m de clés d'exploitation KTi pour décrypter le programme diffusé, ce dernier étant encrypté par des mots de contrôle (CW) procédé **caractérisé en ce qu'**il comporte les étapes suivantes:

   avant la diffusion du programme crypté,

       a- associer à chaque clé d'exploitation KTi chiffrée une valeur aléatoire R i pour générer un nombre entier m de codes secrets distincts;
       b- transmettre les codes secrets générés à chaque abonné;
       c- transmettre aux abonnés une valeur aléatoire Ri pour calculer une clé d'exploitation KTi parmi les m clés KTi lorsque la clé d'exploitation KTi doit être utilisée pour déchiffrer le mot de contrôle CW, et

   pendant la période de diffusion du programme crypté,

       d-transmettre aux abonnés une nouvelle valeur aléatoire Ri pour changer la clé d'exploitation KTi.

6. Procédé selon la revendication 5 , **caractérisé en ce que** les valeurs aléatoires Ri sont transmises successivement aux abonnés à des dates imprévisibles.

7. Procédé selon la revendication 6 , **caractérisé en ce que** chaque code secret est calculé par une fonction arithmétique réversible.

8. Procédé selon la revendication 7, **caractérisé en ce que** la fonction arithmétique réversible est l'opération logique XOR.

**9.** Procédé selon la revendication 6, **caractérisé en ce que** tant qu'une clé KT1 n'est pas utilisée, la valeur aléatoire R i n'est pas transmise.

**10.** Procédé selon la revendications 7, **caractérisé en ce que** chaque code secret est mémorisé dans une carte à puce (6).

**Claims**

**1.** An access control method for an encrypted program transmitted by an operator (1) to a plurality of groups of subscribers, each group of subscribers being equipped with a group key KG, and each subscriber being able to receive from the operator (1) an operating key KT, enciphered by the group key KG for decrypting the program transmitted, which is encrypted by control words (CW), the method **characterized in that** the method furthermore comprises the following steps:

Before transmission of the encrypted program,

a) associating the enciphered operating key KT with a random value R to generate a secret code;
b) transmitting the secret code to subscribers, and
c) transmitting the random value R to subscribers to calculate the operating key KT when the operating key KT should be used to decrypt the control word (CW)

**2.** The method according to claim 1, **characterized in that** the secret code is calculated by a reversible arithmetic function.

**3.** The method according to claim 2, **characterized in that** the reversible arithmetic function is the logical operation XOR.

**4.** The method according to claim 1, **characterized in that** the secret code generated is stored in a smart card.

**5.** An access control method for an encrypted program transmitted by an operator (1) to a plurality of groups of subscribers, each group of subscribers being equipped with a group key KG, and each subscriber being able to receive from the operator (1) a whole number m of operating keys KT, for decryption of the program transmitted, which is encrypted by control words (CW)
The method **characterized in that** the method comprises the following steps:

Before transmission of the encrypted program,

a) associating with each enciphered operating key $KT_i$ a random value $R_i$, to generate a whole number m of distinct secret codes;
b) transmitting the secret codes generated to each subscriber;
c) transmitting to subscribers a random value R; to calculate an operating key $KT_i$ from among the m keys $KT_i$ when the operating key KTi should be used to decrypt the control word (CW), and during the transmission period of the encrypted program,
d) transmitting to subscribers a new random value $R_i$ to change the operating key $KT_i$.

**6.** The method according to claim 5, **characterized in that** the random values $R_i$ are transmitted successively to subscribers on dates that cannot be predicted.

**7.** The method according to claim 6, **characterized in that** each secret code is calculated by a reversible arithmetic function.

**8.** The method according to claim 7, **characterized in that** the reversible arithmetic function is the logical operation XOR.

**9.** The method according to claim 6, **characterized in that** so long as a key $KT_i$ is not utilized, the random value $R_i$ is not transmitted.

**10.** The method according to claim 7, **characterized in that** each secret code is stored in a smart card (6).


**Patentansprüche**

**1.** Verfahren zur Kontrolle eines Zugriffs auf ein verschlüsseltes Programm, das von einem Operator (1) an eine Mehrzahl von Teilnehmergruppen gesendet wird, wobei jede Teilnehmergruppe mit einem Gruppenschlüssel KG versehen ist und jeder Teilnehmer von dem Operator (1) einem mit dem Gruppenschlüssel KG verschlüsselten Nutzungsschlüssel KT erhalten kann, um das gesendete Programm zu entschlüsseln, wobei letzeres durch Kontrollwörter (CW) verschlüsselt ist, **dadurch gekennzeichnet, dass** es ferner die folgenden Schritte aufweist:

a) Zuordnung eines Zufallswertes R zu dem verschlüsselten Nutzungsschlüssel KT, um einen Geheimcode zu erzeugen,
b) Übertragung des Geheimcodes an die Teilnehmer vor dem Senden des verschlüsselten Programms, und
c) Übertragung des Zufallswertes R an die Teilnehmer, um den Nutzungschlüssel KT zu berechnen, wenn der Nutzungschlüssel KT gebraucht wird um die Kontrollwörter (CW) zu entschlüsseln

**2.** Verfahren nach Anspruch 1, **dadurch gekennzeichnet, dass** der Geheimcode durch eine reversible arithmetische Funktion berechnet wird.

**3.** Verfahren nach Anspruch 2, **dadurch gekennzeichnet, dass** es sich bei der reversiblen arithmetischen Funktion um die logische XOR-Operation handelt.

**4.** Verfahren nach Anspruch 1, **dadurch gekennzeichnet, dass** der erzeugte Geheimcode in einer Chipkarte gespeichert ist.

**5.** Verfahren zur Kontrolle eines Zugriffs auf ein verschlüsseltes Programm, das von einem Operator (1) an eine Mehrzahl von Teilnehmergruppen gesendet wird, wobei jede Teilnehmergruppe mit einem Gruppenschlüssel KG versehen ist und jeder Teilnehmer von dem Operator (1) eine Ganzzahl m von Nutzungschlüsseln $KT_i$ erhalten kann, um das gesendete Programm zu entschlüsseln, wobei letzeres durch Kontrollwörter (CW) verschlüsselt ist, **dadurch gekennzeichnet, dass** es ferner die folgenden Schritte aufweist:

a) Zuordung eines Zufallswertes $R_i$ zu jedem verschlüsselten Nutzungschlüssel $KT_i$, um eine Ganzzahl m von unterschiedlichen Geheimcodes zu erzeugen.
b) Übertragung der erzeugten Geheimcodes an jeden Teilnehmer
c) Übertragung eines neuen Zufallswertes $R_i$ an die Teilnehmer, um den Nutzungschlüssel $KT_i$ aus einer Ganzzahl m zu berechnen, wenn der Nutzungschlüssel $KT_i$ gebraucht wird um die Kontrollwörter (CW) zu entschlüsseln, und während der Übertragungszeit des verschlüsselten Programms
d) Übertragung eines neuen Zufallswertes $R_i$ an die Teilnehmer, um den Nutztungschlüssel $KT_i$ zu wechseln.

**6.** Verfahren nach Anspruch 5, **dadurch gekennzeichnet, dass** die Zufallswerte $R_i$ nacheinander an die Teilnehmer zu unvorhersehbaren Daten übertragen werden.

**7.** Verfahren nach Anspruch 6, **dadurch gekennzeichnet, dass** jeder Geheimcode durch eine reversible arithmetische Funktion berechnet wird.

**8.** Verfahren nach Anspruch 7, **dadurch gekennzeichnet, dass** es sich bei der reversiblen arithmetischen Funktion um die logische XOR-Operation handelt.

**9.** Verfahren nach Anspruch 6, **dadurch gekennzeichnet, dass** der Zufallswert $R_i$ nicht übertragen wird, solange kein Schlüssel $KT_i$ benutzt wird.

**10.** Verfahren nach Anspruch 7, **dadurch gekennzeichnet, dass** jeder Geheimcode in einer Chipkarte (6) gespeichert ist.

Fig. 1

8

EMi=F(KGi,KT)    EMM_1,...,EMM_i,...,EMM_n

1

15

14

17

EMM_1,...,EMM_i,...,EMM_n    EMM_1,...,EMM_i,...,EMM_n    EMM_1,...,EMM_i,...,EMM_n

17    17

4    4    4

EMM_1    18    EMM_i    18    EMM_n    18

Fig. 2

EMMi=F(KGi,R,KT)    EMM_1,...,EMM_i,...,EMM_n

EMM_1,...,EMM_i,...,EMM_n    EMM_1,...,EMM_i,...,EMM_n    EMM_1,...,EMM_i,...,EMM_n

EMM_1    EMM_i    EMM_n

## Fig. 3

$EMMi=F(KGi,Ri,KTi)\|...\|F(KGi,Rm,KTm)$

15

1

14

17

EMM_1,...,EMM_i,...,EMM_n

17

EMM_1,...,EMM_i,...,EMM_n

17

EMM_1,...,EMM_i,...,EMM_n

4

4

4

EMM_1

18

EMM_i

18

EMM_n

18

6

6

6

**Fig. 4**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9909743 A